# EUROPÄISCHE PATENTANMELDUNG

(11) **EP 0 600 264 A1**
(43) Veröffentlichungstag der Anmeldung: **08.06.1994**
(21) Anmeldenummer: 93118062.4
(22) Anmeldetag: 08.11.1993
(51) Int. Cl.: C08F 8/32

(54) **Verfahren zur Herstellung von wasserlöslichen Polymeren durch Aminolyse von Polyacrylnitril**

(30) Priorität: 20.11.1992 DE 4239128
(71) Anmelder: WOLFF WALSRODE AKTIENGESELLSCHAFT, D-29699 Walsrode (DE)
(72) Erfinder: Szablikowski, Klaus, Dr., D-29664 Walsrode (DE); Koch, Wolfgang, Dr., D-29699 Bomlitz (DE); Leffers, Heinrich, Dr., D-29664 Walsrode (DE); Poersch-Panke, Hans-Günter, Dr., D-29664 Walsrode (DE); Böhmer, Branislav, Dr., D-29664 Walsrode (DE)
(74) Vertreter: Braun, Rolf, Dr.

(57) **Zusammenfassung**

Die Erfindung betrifft ein Verfahren zur Herstellung von wasserlöslichen Polymeren in Form eines Feststoffes oder als wäßrige Lösung, deren Salze und Umsetzungsprodukte mit Alkylierungsmitteln. Diese Polymere finden Anwendung als Dispergiermittel und Retentions- und Entwässerungsmittel.

## Beschreibung

Die Erfindung betrifft ein Verfahren zur Herstellung von wasserlöslichen Polymeren in Form eines Feststoffes oder als wäßrige Lösung, deren Salze und Umsetzungsprodukte mit Alkylierungsmitteln. Diese Polymere finden Anwendung als Dispergiermittel und Retentions- und Entwässerungsmittel.

Zur Herstellung von wasserlöslichen Polymeren aus Polyacrylnitril oder aus einem seiner Copolymeren mit primären oder sekundären Aminen oder Polyaminen sind verschiedene Verfahren bekannt. Es ist vorteilhaft, für verschiedene Anwendungen, so z.B. als Retentions- und Entwässerungsmittel oder als Dispergiermittel, wasserlösliche Polymerisate herzustellen, die frei von Begleitstoffen irgendwelcher Art sind und als Feststoff oder als wäßrige Lösung eingesetzt werden.

Nach dem Stand der Technik (z.B. DE 34 32 569, DE 35 30 477, US 4 595 731) werden zur Herstellung von wäßrigen Lösungen von wasserlöslichen Polymeren aus Polyacrylnitril oder Polyacrylnitrilcopolymeren Katalysatoren auf Schwefelbasis verwendet, die naturgemäß zu einer Geruchsbelästigung führen und in nachfolgenden Schritten durch den Einsatz weiterer Stoffe, die nicht unbedenklich sind, abgetrennt werden müssen.

In DE 34 32 569, DE 35 30 477, DE 35 30 478 und EP 0 212 102 werden zusätzlich höhersiedende Alkohole eingesetzt, die bei bestimmten Anwendungen stören und sich nur schwer von der erhaltenen, wäßrigen Lösung des wasserlöslichen Polymeren trennen lassen. Stand der Technik ist weiter die Durchführung der Reaktion mit einem großen Überschuß an Amin und gegebenenfalls Wasser, um die auftretenden, hohen Viskositäten handhaben zu können. Die nicht umgesetzten Reaktionskomponenten, und hier vor allem das eingesetzte Amin, werden in nachfolgenden Schritten meist zeit- und kostenintensiv abgetrennt.

Zur Herstellung des Polymeren in fester Form müssen die 5 bis 15 Gew.-%igen Lösungen ebenfalls mit einem hohen Energie-, Zeit- und Kostenaufwand getrocknet werden.

Der Erfindung liegt die Aufgabe zugrunde, wasserlösliche Polymerisate herzustellen, die als Feststoff oder wäßrige Lösung vorliegen, ohne zu einer Geruchsbelästigung bei ihrer Herstellung zu führen und keiner aufwendigen Nachbereitung der Reaktionsmasse bedürfen, um nicht umgesetzte Komponenten abzutrennen und gute Anwendungseigenschaften zeigen.

Es wurde überraschenderweise gefunden, daß die Umsetzung von Polyacrylnitril oder Polyacrylnitrilcopolymeren im geringen Überschuß oder sogar mit stöchiometrischen Mengen an Aminkomponente bis zu praktisch vollständigem Umsatz durchzuführen ist. Das als Schmelze anfallende, wasserlösliche Polymerisat ist frei von Aminen und Wasser.

Als erster Bestandteil zur Herstellung des Polymerisates wird ein Polyacrylnitrilpolymerisat mit einer Molmasse von 5000 bis 500.000 oder ein Copolymerisat oder Terpolymerisat mit mindestens 20 Mol-% Polyacrylnitril verwendet. Als Comonomere kommen z.B. in Betracht: Acrylamid, Acrylsäure sowie deren Ester, wie z.B. Acrylsäuremethylester, Acrylsäureethylester, Acrylsäurebutylester und deren Hydroxyalkylester, wie z.B. 2-Hydroxyethylacrylat, 2-Hydroxypropylacrylat, Maleinsäure, Fumarsäure, Methacrylamid, Methacrylsäure sowie deren Ester, so z.B. Methacrylsäuremethylester, Methacrylsäureethylester, Methacrylsäurebutylester und auch deren Hydroxyalkylester, wie z.B. 2-Hydroxyethylmethacrylat, 2-Hydroxypropylmethacrylat, Dimethylaminoethylacrylat, Dimethylaminoethylmethacrylat, Diethylaminoethylacrylat, Diethylaminoethylmethacrylat, Vinylacetat, N-Vinylpyrrolidon, N-Vinylimidazol, Vinylpropionat, Vinylbutyrat.

Der zweite Bestandteil zur Herstellung des Polymerisates ist eine Aminkomponente, von der 0,2 bis 1,2 Mol Äquivalente, bezogen auf die Nitrilgruppen im Polyacrylnitrilpolymerisat, eingesetzt werden. Die Aminkomponente muß mindestens zwei Amingruppen mit unterschiedlicher Reaktivität tragen. Sind mehr als zwei Amingruppen vorhanden, so muß eine Amingruppe reaktiver sein als die restlichen Als Amine kommen z.B. in Frage: 3-Aminopropylmorpholin, N-(3-Aminopropyl)-diethanolamin, N,N-Dimethyl-1,3-propandiamin, N-Methyl-1,3-propandiamin, N-Methyl-ethylendiamin, N,N-Dimethyl-ethylendiamin.

Die dritte Komponente zur Herstellung des Polymerisates ist 0,5 bis 4 Mol-Äquivalente, bezogen auf die Nitrilgruppen im Polyacrylnitrilpolymeren, an Wasser.

Als vierte Komponente kann zur Erhöhung der Molmasse eine bifunktionelle Verbindung, wie z.B. 1,2-Dichlorethan, Epichlorhydrin, 1,2-Dichlorpropan in einer Menge von bis zu 0,05 Mol-Äquivalente, bezogen auf die Nitrilgruppen im Polyacrylnitrilpolymeren, vor, während oder nach der Reaktion zugegeben werden.

Die Komponenten werden in einer Reaktionsapparatur unter starker Scherbelastung, z.B. einem Kneter oder Extruder bei einem Druck bis zu 6 bar und einer Temperatur von 80 bis 160°C für etwa 30 min bis 6 h umgesetzt. Bevorzugt sind Drücke von 4 bis 6 bar und Temperaturen von 140 bis 160°C und Zeiten für die Reaktion von 2 bis 3 h. Wird das Amin oder das Wasser im Überschuß eingesetzt, so ließ sich das Amin und das Wasser überraschenderweise durch Anlegen eines Vakuums in 30 min vollständig entfernen. Aus der Reaktionsapparatur wird das wasserlösliche Polymerisat in der bevorzugten Ausführungsform als dünner, schmelzflüssiger Strang, entweder granuliert oder gemahlen oder durch Einlaufen in ein Gefäß, das mit einem Rührer versehen ist und eine entsprechende Wassermenge enthält, in Form einer wäßrigen Lösung erhalten.

Das Polymerisat kann gegebenenfalls mit den auf dem Fachgebiet bekannten Methoden in ein Salz, einer organischen Säure oder einer anorganischen Säure überführt werden oder gegebenenfalls in der bevorzugten Ausführungsform in ein quaternäres Ammoniumsalz umgewandelt werden.

Der Gegenstand der Erfindung soll anhand folgender Beispiele noch näher erläutert werden.

### Beispiel 1

In einem Werner & Pfleiderer-Kneter (Typ LVK 2,5 A) mit gegenläufigen Schaufeln wurden 902 g Polyacrylnitrilpolymerisat mit einer Molmasse von 113.000, 1.736 g N,N-Dimethyl-1,3-propandiamin und 306 g Wasser auf eine Temperatur von 150°C unter dem sich einstellenden Druck gemischt. Die Drehzahl der Schaufeln betrug 30 UpM. Nach 2 h wurde für 30 min ein Vakuum angelegt, um den entstehenden Ammoniak zu entfernen, Man erhielt 2.100 g wasserlösliches Polymerisat, das laut Analyse frei von N,N-Dimethyl-1,3- propandiamin war. Die restliche Menge an Polymeren befand sich im Kneterraum und konnte mit Wasser leicht entfernt werden. Das Produkt hatte einen Staudinger- Index von 0,1295 dl/g, gemessen in 1n NaNO₂.

### Beispiel 2

In dem in Beispiel 1 erwähnten Kneter wurden 2.044 g N,N-Dimethyl-1,3-propandiamin, 885 g Polyacrylnitril mit einer Molmasse von 6.300 und 360 g Wasser bei einer Temperatur von 160°C unter dem sich einstellenden Druck 90 min gemischt. Anschließend wurde die Reaktion unter Vakuum weitere 60 min fortgesetzt. Es wurden 1.424 g aminfreies, festes, wasserlösliches Polymerisat erhalten, die restliche Menge an Polymeren befand sich im Kneterraum.

### Beispiel 3 (Vergleich)

In einem 1 l-Dreihalskolben mit Rührer und Rückflußkühler wurden in 271 g N,N-Dimethyl-1,3-propandiamin, 48 g Wasser und 120 g Polyacrylnitril mit einer Molmasse von 113 000 suspendiert. Unter Rühren wurde die Suspension mit einem Ölbad aufgeheizt. Bei einer Ölbadtemperatur von 140°C und einer Innentemperatur von 105 bis 110°C wurde die Suspension unter starkem Rückfluß 6 Stunden lang gerührt. In dieser Zeit färbte sich die anfänglich weiße Suspension dunkel, eine Umsetzung des wasserunlöslichen Polyacrylnitril in ein wasserlösliches Polymer fand nicht statt.

## Patentansprüche

1. Verfahren zur Herstellung von wasserlöslichen Polymeren, dadurch gekennzeichnet, daß man
a) ein Acrylnitrilhomo- oder Acrylnitrilcopolymeres mit
b) 0,2 bis 1,2 Mol eines mindestens eine primäre Amingruppe und mindestens eine sekundäre oder tertiäre Amingruppe enthaltenden Amins und
c) 0,5 bis 4 Mol Wasser,
bezogen auf 1 Mol an Nitrilgruppen des Acrylnitrilhomo- oder Acrylnitrilcopolymeren unter starker Scherbelastung umsetzt.

2. Verfahren zur Herstellung von wasserlöslichen Polymeren nach Anspruch 1, dadurch gekennzeichnet, daß das Polymere 0 bis 80 Mol-%, bevorzugt 5 bis 50 Mol-% Copolymeres enthält.

3. Verfahren zur Herstellung von wasserlöslichen Polymeren nach Anspruch 1, dadurch gekennzeichnet, daß das Polymere ein Acrylnitrilhomopolymer ist.

4. Verfahren zur Herstellung von wasserlöslichen Polymeren nach Anspruch 3, dadurch gekennzeichnet, daß das Homopolymere ein Molekulargewicht von 50.000 bis 200.000 besitzt.

5. Verfahren zur Herstellung von wasserlöslichen Polymeren nach Anspruch 1 oder 2, dadurch gekennzeichnet, daß als Copolymere Acrylsäuremethylester, Acrylamid, Acrylsäure oder deren Salze eingesetzt werden.

6. Verfahren zur Herstellung von wasserlöslichen Polymeren nach einem der Ansprüche 1 bis 5, dadurch gekennzeichnet, daß als Amin N,N-Dimethyl-1,3-propandiamin und/oder N,N-Dimethylethylendiamin eingesetzt wird.

7. Verfahren zur Herstellung von wasserlöslichen Polymeren nach einem der Ansprüche 1 bis 6, dadurch gekennzeichnet, daß vor, während oder nach der Reaktion ein Dichlorid und/oder ein Epihalohydrin zugesetzt wird.

8. Polymerisate, erhältlich nach einem Verfahren gemäß einem der Ansprüche 1 bis 7.

9. Verwendung der Polymerisate nach Anspruch 8 als Dispergiermittel.

10. Verwendung der Polymerisate nach Anspruch 8 als Retentions- und Entwässerungsmittel.
